**Europäisches Patentamt**

**European Patent Office**

**Office européen des brevets**

(19)

(11) Veröffentlichungsnummer: **0 222 057 B1**

# EUROPÄISCHE PATENTSCHRIFT

(12)

(45) Veröffentlichungstag der Patentschrift: **18.12.91**

(51) Int. Cl.⁵: **F42B 10/66**

(21) Anmeldenummer: **86107365.8**

(22) Anmeldetag: **30.05.86**

(54) **Überdruckventil für einen pyrotechnischen Gasgenerator.**

(30) Priorität: **21.08.85 DE 3529859**
**14.05.86 DE 3616184**

(43) Veröffentlichungstag der Anmeldung:
**20.05.87 Patentblatt 87/21**

(45) Bekanntmachung des Hinweises auf die
Patenterteilung:
**18.12.91 Patentblatt 91/51**

(84) Benannte Vertragsstaaten:
**DE FR GB IT**

(56) Entgegenhaltungen:
**EP-A- 0 149 947**
**DE-A- 2 650 853**
**DE-A- 3 144 532**
**US-A- 3 948 042**

(73) Patentinhaber: **Rheinmetall GmbH**
**Ulmenstrasse 125 Postfach 6609**
**W-4000 Düsseldorf(DE)**

(72) Erfinder: **Büchele-Buecher, Sigfrid**
**Mönkesweg 53**
**W-4005 Meerbusch-Strümp(DE)**
Erfinder: **Unterstein, Klaus**
**Ziegelstrasse 30**
**W-4000 Düsseldorf(DE)**

## Beschreibung

Die Erfindung betrifft ein Überdruckventil in einem pyrotechnischen Gasgenerator nach den im Oberbegriff des Patentanspruchs 1 angegebenen Merkmalen.

Pyrotechnische Gasgeneratoren werden zum Zweck der Lenkung von insbesondere Flugkörpern oder endphasengelenkten Geschossen eingesetzt. Dabei wird in einer Brennkammer eine Treibladung zu Gas umgesetzt, das im Falle einer erforderlichen Lenkkorrektur Steuerdüsen zugeleitet wird. Ein für Steuerzwecke brauchbarer Betrieb des Gasgenerators ist nur bei konstanten Druckverhältnissen innerhalb der Brennkammer möglich, so daß insbesondere Überdruckspitzen zu vermeiden sind. Es wurde bereits versucht, diese Druckspitzen durch mechanische Überdruckventile abzubauen, die im wesentlichen aus einem Feder-Masse-System bestehen. Bei den in der Praxis anzutreffenden hohen Belastungen haben mechanische Überdruckventile jedoch einen derart großen Platzbedarf, daß sie sich - insbesondere in endphasengelenkten Geschossen - nicht mehr in unmittelbarer Nachbarschaft der Brennkammer anordnen lassen. Überdies zeigen mechanische Überdruckventile wegen der relativ großen Zeitkonstante des Feder-Masse-Systems ein schlechtes Ansprechverhalten, das den Anforderungen der Praxis nicht gerecht wird. Schließlich ist das Öffnungs- und Schließverhalten dieser herkömmlichen mechanischen Überdruckventile mit zu hohen Toleranzen behaftet, so daß eine Anwendung bei einer Präzisionslenkung nicht möglich ist.

Aus der DE-A-31 44 632 ist ein den Merkmalen des Oberbegriffs des Patentanspruchs 1 entsprechendes Überdruckventil bekannt, das zur Aktivierung der zum Öffnen und Schließen der Steuerdüsen vorgesehenen Betätigungselemente einen richtungsweisenden elektrischen Steuerbefehl eines Geschoß-Suchkopfes benutzt. Dieser Steuerbefehl wird über eine elektronische Schaltung wenigstens einem elektromagnetischen Schaltventil für eine pneumatische oder mechanische Steuerungsart der Betätigungselemente weitergeleitet. Dadurch kann bei geschlossenen Betätigungselementen automatisch zentral abströmendes Generatorgas derartig durch die Betätigungselemente in Millisekunden umgeleitet werden, daß es zur Erzeugung von Steuerimpulsen gezielt aus unabhängig voneinander ansteuerbaren Steuerdüsen austreten kann.

Auch dieses Überdruckventil hat jedoch den Nachteil, daß der dem Brennkammerdruck entsprechende Ansprechdruck zum Ableiten der Überdruckspitzen fest eingestellt ist und nicht in Abhängigkeit von der Temperatur des Gasgenerator-Treibsatzes auf einen variierbaren Sollwertdruck eingestellt werden kann.

Bekanntlich ändert sich in Abhängigkeit von der vorhandenen Treibsatztemperatur das Abbrandverhalten des Treibsatzes. Bei einem fest eingestellten Brennkammerdruck tritt beispielsweise bei einer Treibsatztemperatur von + 65° C eine größere Abbrandgeschwindigkeit des Treibsatzes auf, wodurch die Brenndauer des Treibsatzes verkürzt wird und gelenkte Geschosse im Flugendbereich nicht mehr gesteuert werden können. Bei gleicher Brennkammerdruckeinstellung wird hingegen bei einer niedrigen Treibsatztemperatur beispielsweise von - 40° C auch nur eine niedrige Abbrandgeschwindigkeit erzielt, so daß aufgrund eines zu gering produzierten Gasmassenstromes ein nicht ausreichender Schub für die Querbeschleunigung des Geschosses auftritt.

Aufgabe der Erfindung ist es, ein neuartiges, raumsparendes Überdruckventil in einem pyrotechnischen Gasgenerator anzugeben, das in unmittelbarer Nachbarschaft der Brennkammer, vorzugsweise eines endphasengelenkten Geschosses, angeordnet werden soll, und das einen Betrieb des Gasgenerators ohne Druckspitzen in der Brennkammer bei konstantem Druckniveau gestattet, sowie in Abhängigkeit von der Temperatur und einer geforderten konstanten Abbrandgeschwindigkeit des Treibsatzes eine variable Einstellung des Drucksollwertes ermöglicht.

Ausgehend von einem Überdruckventil der eingangs näher bezeichneten Art wird diese Aufgabe durch die im kennzeichnenden Teil des Patentanspruchs 1 angegebenen Merkmale gelöst.

Vorteilhafte Ausgestaltungen und Weiterbildungen der Erfindung gehen aus den Unteransprüchen hervor.

Die Erfindung wird nachfolgend unter Bezug auf die Zeichnung näher erläutert. Dabei zeigt:

Fig. 1:    im Längsschnitt ein erstes Ausführungsbeispiel der Erfindung;

Fig. 2:    einen Schnitt gemäß der Linie 2 - 2 nach Fig. 1;

Fig. 3:    einen Querschnitt entlang der Linie 3 - 3 nach Fig. 1;

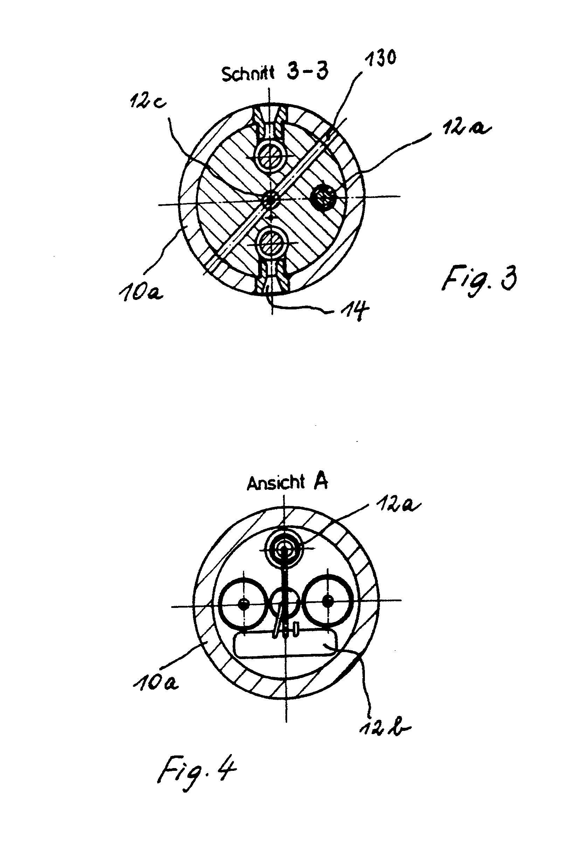

Fig. 4:    eine Ansicht auf den Gasgenerator mit Blickrichtung entsprechend dem Pfeil A in Fig. 1;

Fig. 5:    einen Längsschnitt durch ein weiteres Ausführungsbeispiel der Erfindung;

Fig. 6:    einen Längsschnitt entlang der Linie 6 - 6 nach Fig. 5;

Fig. 7:    einen Querschnitt entlang der Linie 7 - 7 nach Fig. 5;

Fig. 8:    ein Blockschaltbild einer elektronischen Schaltungsanordnung zum Abbau eines Brennkammerüberdrucks;

Fig. 9:    ein Diagramm zur Erläuterung des Schaltverhaltens der elektronischen Schaltungsanordnung nach Fig. 8;

Fig. 10: ein Funktionsschaltbild der elektronischen Schaltung zur Einstellung variabler Solldruckwerte in der Brennkammer und Abbau des den Solldruckwert übersteigenden Überdrucks.

Fig 11: ein Diagramm zur Ermittlung des Solldruckwertes der Brennkammer in Abhängigkeit von der Abbrandgeschwindigkeit und der Ausgangstemperatur des Treibsatzes.

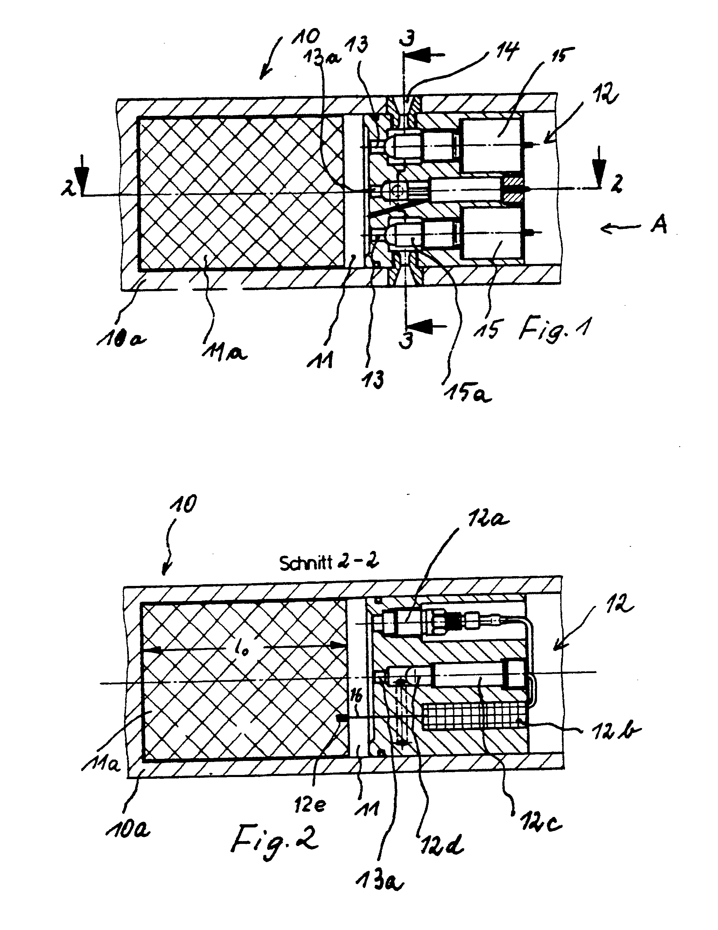

Fig. 1 zeigt in schematischer Darstellung im Längsschnitt die für das Verständnis der Erfindung wesentlichen Teile eines pyrotechnischen Gasgenerators 10. Ein Gehäuse 10a umfaßt eine Brennkammer 11 mit einem darin angeordneten pyrotechnischen Treibsatz 11a. Durch Umsetzung des Treibsatzes 11a entsteht ein hochgespanntes Gas, das über Kanäle 13 aus der Brennkammer 11 entnommen und Steuerdüsen 14 zugeleitet werden kann. Bei Austritt des Gases aus den Steuerdüsen 14 wird ein Korrekturimpuls zu Bahnkorrektur des Flugkörpers oder Geschosses erzeugt. Die Kanäle 13 sind durch elektronisch betätigbare Ventile 15 verschließbar. Die Ventile 15 bestehen im wesentlichen aus einem Solenoid, das bei Strombeaufschlagung einen Stößel in Längsaxialrichtung fortbewegt. Der Stößel trägt an seiner dem Kanal 13 zugewandten Spitze einen Keramikkolben 15a mit angeformter Halbkugel zum gasdichten Verschluß des Kanals 13.

Der Keramikkolben 15a widersteht den hohen thermischen Belastungen, die die aus den Kanälen 13 ausströmenden heißen Gase auf ihn ausüben und schützt infolge seiner geringen Wärmeleitung auch die übrigen Teile des Ventils 15 vor einer übermäßigen thermischen Belastung.

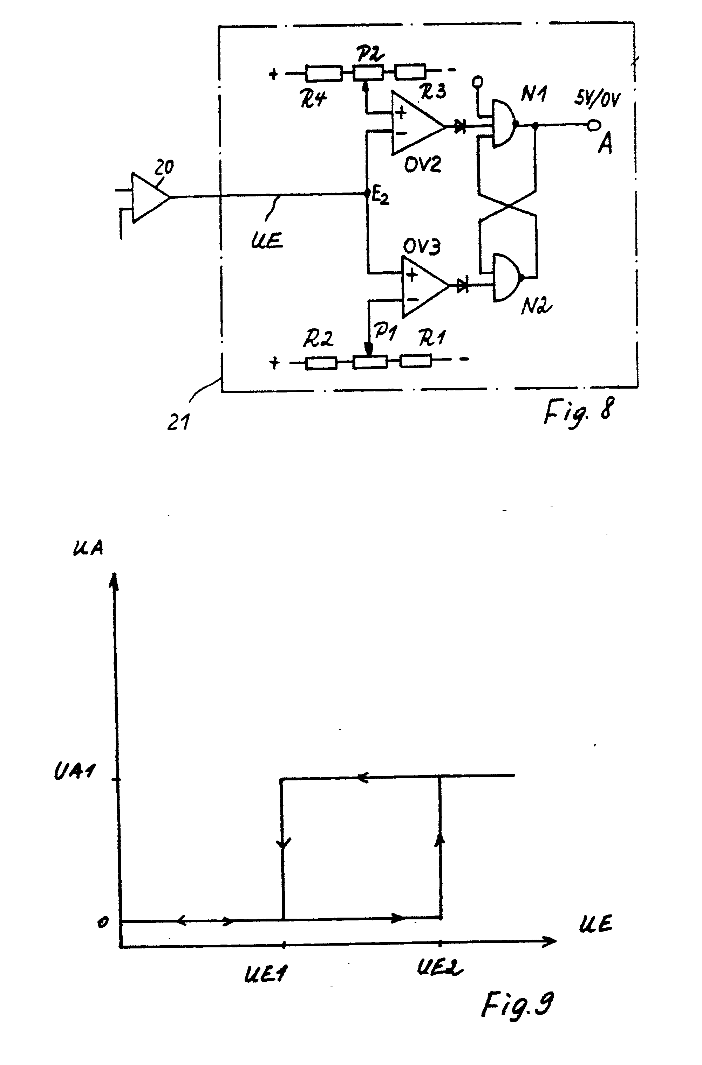

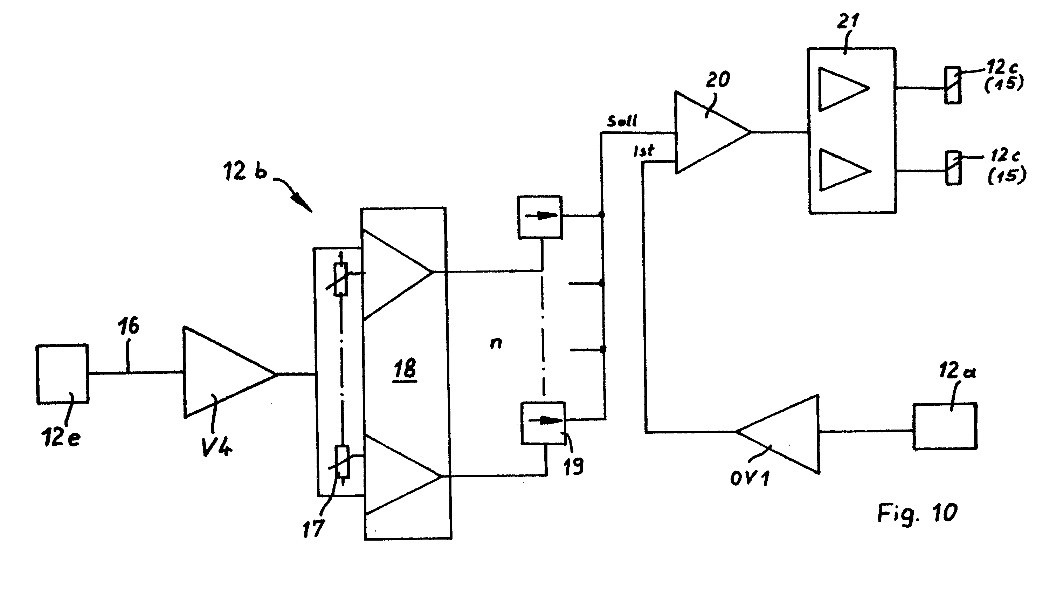

Ein optimaler Betrieb des Gasgenerators 10 für Lenkzwecke ist nur bei möglichst gleichbleibendem Druck in der Brennkammer 11 sichergestellt; insbesondere sollen Druckspitzen vermieden werden. Dazu ist ein Überdruckventil vorgesehen, das sich durch einen extrem geringen Platzbedarf, ein schnelles Ansprechverhalten und eine hohe Genauigkeit bei der Einstellung des Drucksollwertes auszeichnet. Dieses Überdruckventil besteht aus verschiedenen Komponenten, die räumlich voneinander getrennt im Steuerteil 12 des Gasgenerators 10 angeordnet sind und somit eine optimale Nutzung des sehr begrenzten zur Verfügung stehenden Raums ermöglichen. Als erste Komponente des Überdruckventils ist ein Druckaufnehmer 12a vorgesehen, der derart in einer Bohrung angeordnet ist, daß seine Druckaufnahmefläche dem Brennkammerdruck der Brennkammer 11 ausgesetzt ist.Ein geeigneter Druckaufnehmer ist beispielsweise der Quarzkristall-Hochdruckaufnehmer, Typ 6201, der Firma Kistler Instrumente AG, Schweiz, der Drücke bis 5000 at erfaßt und Beschleunigung bis etwa 15000 g standhält. Bei Druckbeaufschlagung wandelt der Druckaufnehmer den anstehenden Druckwert in eine entsprechende elektrische Ladung um. Diese elektrische Ladung wird einer elektronischen Schaltung 12b (Fig. 8, Fig. 9, Fig. 10) zugeführt. Ein Operationsverstärker OV1 der Schaltung 12b (Fig. 10) wandelt die vom Druckaufnehmer 12a (Fig. 10) gelieferte Ladung in einen entsprechenden Spannungswert um und verstärkt diesen; ein zweiter und dritter Operationsverstärker OV2, OV3 (Fig. 8) sind als Vergleicher geschaltet und bilden in dieser Aordnung einen Schmitt-Trigger mit Hysterese-Schaltverhalten. Dabei werden obere und untere Schaltschwelle getrennt voneinader durch die Widerstände R1, R2 und das Potentiometer P1 bzw. durch die Widerstände R3, R4 und das Potentiometer P2 eingestellt. Die darauffolgenden Nand-Gates N1 und N2 sind zu einem RS-Flip-Flop verschaltet. Der Schaltausgang A nimmt - je nach Eingangsspannung UE - einen Wert von + 5 Volt oder 0 Volt an. Mit dem Schaltausgang A ist ein als Betätigungselement ausgebildetes Stellglied 12c verbunden, das einen Keramikkolben 12d in Linearrichtung vor- oder zurückbewegt und dadurch einen weiteren Gaskanal 13a öffnet oder schließt, der die Verbindung zwischen der Brennkammer 11 und einem Gasableitkanal 130 zur Ableitung von Druckspitzen innerhalb der Brennkammer 11 herstellt. Dieser Gasableitkanal 130 ist - wie in Fig. 3 gezeigt wird - diagonal im Gehäuse 10a des Gasgenerators 10 angeordnet. Der an der Spitze des Stellglieds 12c angeordnete Keramikkolben 12d widersteht einerseits hohen Temperaturen und ist dadurch verschleißfest; andererseits schützt er das Stellglied 12c selbst vor schädlichen Temperatureinflüssen.

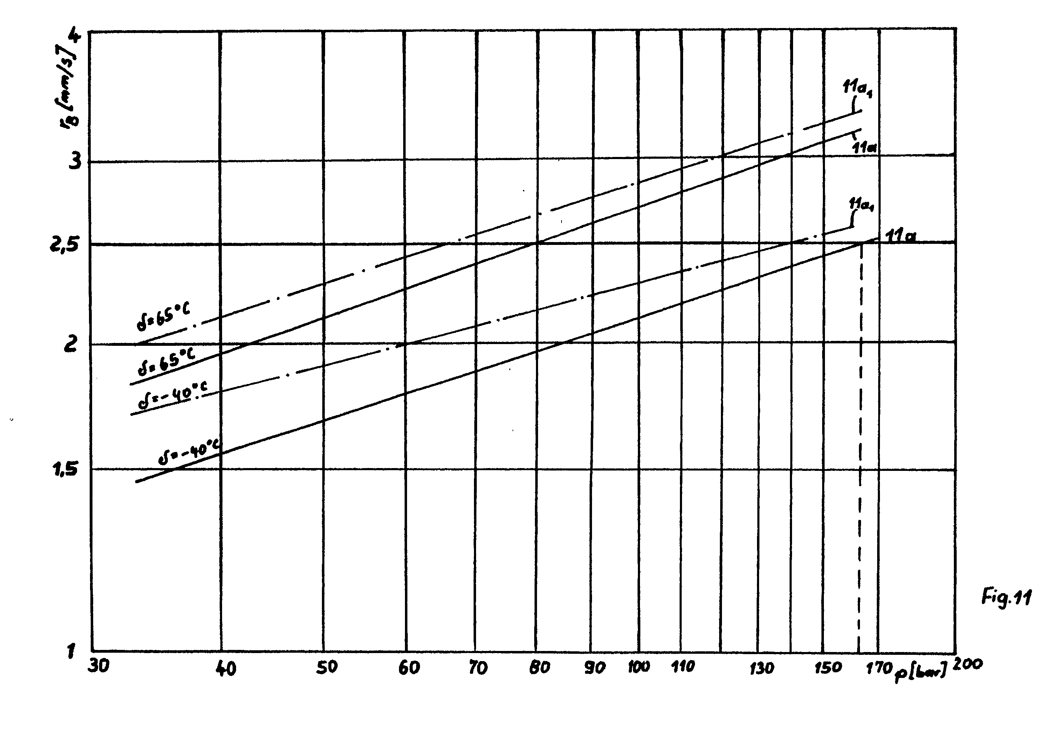

Zur Drucksollwerteinstellung des Stellgliedes 12c ist als weitere Komponente des Sicherheitsventiles ein Wärmefühler 12e vorgesehen, der im Treibsatz 11a angeordnet ist und über eine Leitung 16 seine Signale an die elektronische Schaltung 12b weiterleitet. Der in bekannter Weise als Diode oder Transistor ausgebildete Temperaturfühler 12e ist vorzugsweise zylindrisch aufgebaut und benötigt bei einem Durchmesser von 3mm nur einen geringen Raumbedarf innerhalb des Treibsatzes 11a. Der Wärmefühler 12e wird zu Beginn des Geschoßweges durch die Geschoßbeschleunigung aktiviert und mißt wenige Millisekunden (maximal 10ms) die Temperatur des Treibsatzes 11a, deren Signale in der elektronischen Schaltung 12b , zur Ermittlung eines von der Treibsatztemperatur $\delta$ und der Abbrandgeschwindigkeit $r_B$ des Treibsatzes 11a abhängigen Arbeitsdruckes der zu verbrennenden Gase in der Brennkammer 11, verarbeitet werden. Die elektronische Schaltung 12b ermittelt dabei für das Stellglied 12c den Arbeitsdruck p (Fig. 11) als Funktion der Treibsatztemperatur $\delta$ bei konstanter vorgegebener Abbrandgeschwindigkeit $r_B$ des Treibsatzes 11a, wobei die Treibsatztemperatur $\delta$ in den Grenzen zwischen minus 40°C und plus 65°C liegen kann.

Das Stellglied 12c ist somit besonders vorteilhaft in der Lage, den zur optimalen Verbrennung des Treibsatzes notwendigen Sollwert des Brennkammerdrucks p während des gelenkten Geschoßweges sicherzustellen. Es ist nunmehr möglich, beispielsweise bei einer vorgesehenen Abbrandgeschwindigkeit von $r_B$ = 2,5 mm pro Sekunde eines bekannten Treibsatzes 11a und bei einer Treibsatztemperatur $\delta$ von plus 65°C den Ansprechdruck des Stellgliedes 12c auf einem Brennkammerdruck p von 80 bar oder bei einer Treibsatztemperatur von minus 40°C auf 162 bar einzustellen oder des weiteren bei dazwischenliegenden Treibsatztemperaturen $\delta$ den Ansprechdruck zwischen 80 und 162 bar einzustellen. Die einzustellenden Brennkammerdrücke p ändern sich zwangsläufig bei anderen Treibsatzstoffen. So beträgt der Brennkammerdruck p bei einem bekannten zweiten Treibsatz $11a_1$ bei der gleichen Abbrandgeschwindigkeit $r_B$ = 2,5 mm/s bei der Treibsatztemperatur $\delta$ = 65°C nur noch 66 bar und bei $\delta$ = minus 40°C nunmehr 138 bar.

Durch diese Einstellmöglichkeit entfällt der bei herkömmlicher Verfahrensweise aufgrund einer zu berücksichtigenden maximal auftretenden Treibsatztemperatur zusätzlich im Geschoß mitzuführende Treibstoffbedarf. Bisher war es notwendig, zur Garantie aller im Arbeitsbereich liegenden Treibsatztemperaturen bei gleichen Brennkammerdruckwerten zusätzliche Treibstoffmengen zu berücksichtigen. Nunmehr wird die Länge des Treibsatzes auf eine einer mittleren Temperatur $\delta$ von beispielsweise 20°C entsprechende Länge $l_0$ (Fig.2) ausgelegt, so daß ein zusätzlicher Treibstoffbedarf entbehrlich ist.

Durch den Einsatz des Temperaturfühlers laufen zur Regelung des Brennkammerdrucks innerhalb der elektronischen Schaltung 12b folgende Funktionsschritte ab:
Der Temperaturfühler 12e nimmt die Temperatur des Treibsatzes 11a beim Abschuß auf und übermittelt das Temperatursignal zur Verstärkung und Linearisierung in einen Verstärker $V_4$. In einer Einheit 17 werden in Abhängigkeit von der Temperatur und der vorgegebenen Abbrandgeschwindigkeit des Treibsatzes Spannungswerte über angeordnete Widerstände eingestellt, wobei ein Vergleich der Spannungswerte mit den abgespeicherten n-Lösungen der mathematischen Funktion (Brennkammerdruck p = Funktion von $\delta$ und $r_B$) in einer Komperatoreinheit 18 erfolgt. In einer oder N-Anschalteinheiten 19 wird anschließend die temperaturabhängige Sollwertvorgabe durchgeschaltet und tritt für den Soll-Istwertvergleich in eine Vergleichseinheit 20. Die Ermittlung des Druckistwertes geschieht über den in der Brennkammer vorgesehenen Druckaufnehmer 12a, dessen Signal über den Ladungsverstärker OV1 in die Vergleichseinheit 20 geleitet wird. Das für die Ansteuerung der Stellglieder 12c notwendige elektrische Signal wird in der Endstufe 21 (strichpunktiert eingegrenzter Bereich der Fig. 8) erzeugt.

Als Stellglied 12c läßt sich vorteilhaft ein elektropneumatischer Wandler in Miniaturbauweise, entweder ein Elactiv-Stellglied bzw. ein Vease-Federelement der Firma Raychem einsetzen. Das Elactiv-Stellglied besteht aus einem Zylinder aus einem speziellen Metall mit Formgedächtnis. Durch Wärmezufuhr vermittels einer vom Mikroprozessor 12b beaufschlagten Heizwicklung findet eine Schrumpfung des Stellgliedes 12c und damit eine Öffnung des Gaskanals 13a statt. Die Umkehrung dieses Vorgangs, also die Schließung des Gaskanals 13a nach Abbau einer Druckspitze erfolgt bei Abkühlung des Stellglieds 12c durch Einstellen der Strombeaufschlagung, wobei eine Rückholfeder das Verlängern des Stellglieds 12c in seine Ruhelage unterstützt.

Bei dem Vease-Element handelt es sich um eine Wärmeschrumpfende Feder, bei der durch Wärmezufuhr vermittels eines vom Mikroprozessor 12b beaufschlagten Heizelements ebenfalls eine Verkürzung bzw. Verlängerung erreichbar ist.

Die Aktivierung der Verkürzung des Stellglieds 12c erfolgt im Millisekundenbereich, so daß das Überdruckventil ein sehr gutes Ansprechverhalten zeigt und Überdruckspitzen in der Brennkammer 11 sehr schnell abbaubar sind.

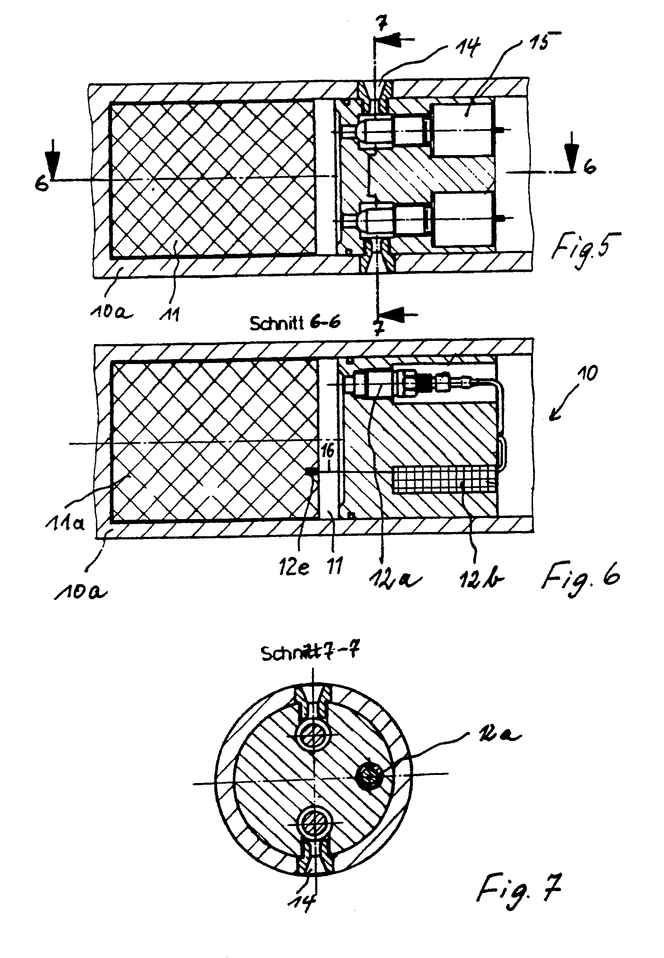

Eine weitere Ausgestaltung der Erfindung wird anhand von Fig. 5 bis Fig. 7 erläutert. Dabei zeigt Fig. 5 einen Längsschnitt durch den Gasgenerator 10. Fig. 6 einen Längsschnitt entlang der Linie 6 - 6 nach Fig. 5 und Fig. 7 einen Querschnitt entlang der Linie 7 - 7 nach Fig. 5. Dieses Ausführungsbeispiel zeichnet sich durch die Benutzung noch weniger Bauelemente aus, wodurch eine weitere Raum- und Gewichtsersparnis eintritt. Mit dem zuerst beschriebenen Ausführungsbeispiel übereinstimmend sind wiederum ein Druckaufnehmer 12a, eine elektronische Schaltung 12b und ein Temperaturfühler 12e vorgesehen. Zur Ableitung von in der Brennkammer 11 auftretenden Überdruckspitzen ist jedoch bei diesem Ausführungsbeispiel der Erfindung kein gesondertes Stellglied vorgesehen. Vielmehr werden bei Feststellung eines Überdrucks durch den Druckaufnehmer 12a die für die Beaufschlagung der Steuerdüsen 14 vorgesehenen Ventile 15 zum Druckabbau benutzt, indem sie nach Maßgabe des festgestellten Überdrucks kurzzeitig geöffnet werden. Dabei wird durch gleichzeitige Ansteuerung diametral gegenüberliegender Ventile 15 dafür gesorgt, daß dabei kein Lenkimpuls auf den Flugkörper oder das Geschoß ausgeübt wird.

## Patentansprüche

1. Überdruckventil in einem pyrotechnischen Gasgenerator (10) mit einer von einem Gehäuse (10a) umschlossenen Brennkammer (11) und einem in dieser angeordneten pyrotechnischen Treibsatz (11a) sowie die Brennkammer (11) mit Steuerdüsen (14) verbindenen Gaskanälen (13, 13a) und Ventileinrichtungen, die zum Öffnen und Schließen der Gaskanäle ein Betätigungselement (12c, 15) enthalten und einem mit einer elektronischen Schaltung (12b) verbundenen Steuerteil zur Betätigung der Ventileinrichtungen, **dadurch gekennzeichnet,** daß ein den Druck in der Brennkammer (11) messender Drucksensor (12a) vorgesehen ist, der ausgangsseitig mit der elektronischen Schaltung (12b) verbunden ist, und daß zur Ermittlung eines von der Temperatur und einer vorgegebenen Abbrandgeschwindigkeit des Treibsatzes (11a) abhängigen Sollwertdruckes ein im Treibsatz (11a) angeordneter Temperaturfühler (12e) mit der elektronischen Schaltung (12b) verbunden ist, sowie daß bei Feststellung eines den Sollwertdruck übersteigenden Drucks in der Brennkammer (11) wenigstens ein von der elektronischen Schaltung (12b) beaufschlagtes Betätigungselement (12c, 15) die Brennkammer (11) zur Ableitung der Druckspitze öffnet.

2. Überdruckventil nach Anspruch 1, **dadurch gekennzeichnet,** daß als Betätigungselement ein Stellglied (12c) nach Aktivierung durch die elektronische Schaltung (12b) derart gesteuert wird, daß bei Feststellung eines Überdrucks in der Brennkammer (11) das überschüssige Heißgas durch den Gasableitkanal (130) kräftefrei entweichen kann.

3. Überdruckventil nach Anspruch 1, **dadurch gekennzeichnet,** daß als Betätigungselement für die Reduzierung des Überdrucks in der Brennkammer (11) die die Steuerdüsen (14) beaufschlagenden Ventileinrichtungen (15) benutzt werden, wobei diese durch das Ausgangssignal der elektronischen Schaltung (12b) derart angesteuert werden, daß bei Feststellung eines Überdruckes in der Brennkammer (11) jeweils mindestens zwei diametral einander gegenüberliegende Steuerdüsen (14) mit dem Überdruck beaufschlagt werden und somit ein kräftefreies Abblasen des überschüssigen Heißgases möglich ist.

## Claims

1. Pressure-relief valve for use in a pyrotechnic gas generator (10) with a combustion chamber (11) surrounded by a housing (10a) and a pyrotechnic propellant charge (11a) located in the said chamber with gas channels (13,13a) connecting the combustion chamber (11) with control nozzles (14), valve devices having an operating device (12c,15) for opening and closing the gas channels and a control part connected with an electronic circuit (12b) and serving to actuate the valve devices, characterised by the fact that a pressure sensor (12a) is provided which measures the pressure in the combustion chamber (11) and which is connected on the output side with the electronic circuit (12b) and, in order to determine a required pressure dependent on the temperature and on a preselected burning rate for the propellant charge (11a), a temperature probe (12e) is positioned in the propellant charge (11a) and connected with the electronic circuit (12b) whereby when the pressure in the combustion chamber (11) is found to exceed the required pressure at least one operating device (12c,15) actuated by the electronic circuit (12b) opens the combustion chamber (11) in order to discharge the peak pressure.

2. Pressure relief valve in accordance with Claim 1, characterised by the fact that the operating device comprises a control element (12c) which, after being activated by the electronic circuit (12b), is controlled in such a way that when an excess pressure is detected in the combustion chamber (11) the excess hot gas can escape, without reaction force, through the gas discharge channel (13).

3. Pressure relief valve in accordance with Claim 1, characterised by the fact that the operating device for reducing the excess pressure in the combustion chamber (11) comprises valve devices (15) acting on the control nozzles (14), the said devices being actuated by the output signal of the electronic circuit (12b) in such a way that when an excess pressure prevails in the combustion chamber (11) at least two diametrically opposed control nozzles (14) are subject to the excess pressure whereby the excess hot gas can escape without reaction forces.

## Revendications

1. Soupape de surpression dans un générateur de gaz pyrotechnique (10), comportant une chambre de combustion (11), délimitée par un boîtier (10a), et une charge propulsive pyrotechnique (11a) disposée dans celle-ci, ainsi que des conduites de gaz (13,13a) reliant la chambre à des tuyères de commande (14) et des dispositifs de soupape comportant un élément d'actionnement (12c,15), pour fermer et ouvrir les conduites de gaz, et une partie de commande en liaison avec un montage électronique (12b) pour actionner les dispositifs de soupape, caractérisée en ce qu'il est prévu une sonde de pression (12a), pour mesurer la pression dans la chambre de combustion (11), dont la sortie est reliée au montage électronique (12b), en ce qu'une sonde de température (12e), disposée dans la charge propulsive (11a) et destinée à établir une pression de consigne en fonction de la température et de la vitesse de combustion de la charge propulsive (11a), est reliée au montage électronique (12b), et en ce que, lorsque la pression mesurée dans la chambre de combustion (11) dépasse la pression de consigne, au moins un élément d'actionnement (12c,15) activé par le montage électronique (12b) ouvre la chambre de combustion (11) pour évacuer la pointe de pression.

2. Soupape de surpression selon la revendication 1, caractérisée en ce que comme élément d'actionnement, un organe de réglage (12c) est commandé après avoir été activé par le montage électronique (12b) de façon que, lorsque une surpression est décelée dans la chambre de combustion (11), les gaz brûlants en surplus puissent être évacués sans effort par la conduite d'évacuation (130).

3. Soupape de surpression selon la revendication 1 caractérisée en ce que les dispositifs de soupape (15) chargeant les tuyères (14) sont utilisés comme élément d'actionnement pour réduire la surpression dans la chambre de combustion (11), ceux-ci étant commandés par le montage électronique (12b) de telle sorte que, lorsque une surpression est décelée dans la chambre de combustion (11), deux tuyères de commande (14) disposées diamétralement l'une en face de l'autre sont chaque fois chargées par la surpression, ce qui permet un échappement sans effort des gaz brûlants en surplus.

Fig. 1

Schnitt 2-2

Fig. 2

Fig. 3

Fig. 4

Fig. 5

Schnitt 6-6

10a    11

11a

10a

12e  11  12a  12b    Fig. 6

Schnitt 7-7

12a

14

Fig. 7

Fig. 8

Fig.9

Fig. 10

Fig.11